# EUROPEAN PATENT SPECIFICATION

(11) **EP 3 316 349 B1**
(45) Date of publication and mention of the grant of the patent: **23.02.2022**
(21) Application number: 16814009.3
(22) Date of filing: 18.03.2016
(51) Int. Cl.: H01G 11/76, H01G 11/84, H01M 4/04, H01M 50/531, H01M 50/538, H01M 50/543, H01M 50/572, H01M 50/54, H01M 50/564, H01M 10/0585, H01M 10/052, H01M 10/0587

(54) **METHOD FOR MANUFACTURING ELECTROCHEMICAL DEVICE**
VERFAHREN ZUR HERSTELLUNG EINER ELEKTROCHEMISCHEN VORRICHTUNG
PROCÉDÉ DE FABRICATION DE DISPOSITIF ÉLECTROCHIMIQUE

(30) Priority: 25.06.2015 JP 2015127722
(43) Date of publication of application: 02.05.2018
(73) Proprietor: Envision AESC Japan Ltd., Zama-shi, Kanagawa (JP)
(72) Inventor: KISHI, Mayuko, Sagamihara-shi Kanagawa 252-5298 (JP)
(74) Representative: Glawe, Delfs, Moll
(86) International application number: PCT/JP2016/058831
(87) International publication number: WO 2016/208238

(56) References cited:
- WO-A1-2013/105362
- JP-A- H09 199 117
- JP-A- H10 223 216
- JP-A- 2001 236 947
- JP-A- 2001 321 953
- JP-A- 2005 149 938
- JP-A- 2007 130 685
- JP-A- 2007 305 345
- JP-A- 2011 204 552
- JP-A- 2014 167 881
- JP-A- 2014 191 967
- JP-A- 2014 191 967

## Description

### Technical Field

The present invention relates to a method for manufacturing an electrochemical device.

### Background Art

Secondary batteries that are examples of electrochemical devices, are widely used, so that secondary battery are not only used as power sources for portable equipment, such as cell phones, digital cameras, and laptop computers, but are also used as power sources for vehicles and households. Among the secondary batteries, lithium ion secondary batteries having a high energy density and a light weight are energy storage devices that have become essential for daily life.

The secondary batteries can be roughly classified into wound-types and laminated types. A battery element (electrode assembly) of the wound-type secondary battery has a structure in which two types of long electrode sheets, i.e., a long positive electrode sheet and a long negative electrode sheet separated from each other by a separator and superposed are wound multiple times. An electrode assembly of the laminated-type secondary battery has a structure in which positive electrode sheets and negative electrode sheets are separated from one another by separators interposed therebetween and alternately and repeatedly laminated. The electrode sheets (a positive electrode sheet and a negative electrode sheet) each include an active material-applied portion where active material (including a mixture containing a binder, conductive material and the like) is applied on a current collector and an active material-non-applied portion where no active material is applied on a current collector in order to connect electrode terminals (a positive electrode terminal and a negative electrode terminal).

In the wound-type secondary battery and the laminated-type secondary battery, the electrode assembly is sealed in an outer container in which one end of the positive electrode terminal is electrically connected to the active material-non-applied portion (current collector) of the positive electrode sheet, and the other end is led out to the outside of the outer container (outer case), and one end of the negative electrode terminal is electrically connected to the active material-non-applied portion (current collector) of the negative electrode sheet, and the other end is led out to the outside of the outer container. An electrolyte solution is also sealed together with the electrode assembly in the outer container.

To connect the active material-non-applied portions of the positive electrode sheets with the positive electrode terminal, typically, the active material-non-applied portions of positive electrode sheets that are superposed are disposed on the positive electrode terminal, and the active material-non-applied portions of positive electrode sheets are collectively joined to the positive electrode terminal (by, for example, ultrasonic welding). The active material-non-applied portions of the negative electrode sheets are also connected with the negative electrode terminal in the same manner as above described.

Patent Document 1 discloses a configuration in which a metal piece is provided so as to be contact with an active material-non-applied portion on the side opposite to an electrode terminal when the active material-non-applied portions (current collectors) of electrode sheets that are superposed are connected with the electrode terminal. That is, active material-non-applied portions that are superposed are sandwiched between the electrode terminal and the metal piece.

Patent Document 2 discloses, as the background art, that each of a positive electrode terminal and a negative electrode terminal is chamfered to remove burrs and flashes generated when the positive electrode terminal and the negative electrode terminal are formed by punching a metal plate. As disclosed in Patent Document 2, attaching a protective tape so that burrs and flashes do not make direct contact with flexible film (laminate film), that makes up the outer container, has been proposed.

Patent Document 3 discloses a configuration in which a protective member is provided to cover corners of active material-non-applied portions (current collectors) and ends of a positive electrode terminal and a negative electrode terminal to prevent a flexible film that makes up an outer container from being damaged.

Patent Document 4 discloses a configuration in which a metal plate is wound to cover a connection portion between an active material-non-applied portion of an electrode and an electrode terminal.

### Prior Art Document

### Patent Document

Patent Document 1: JP2001-236947A
Patent Document 2: JP3997430B
Patent Document 3: JP4692772B
Patent Document 4: International Publication No. WO 2013/031937
Further prior art is disclosed in JP 2001 321953 A, JP 2007 130685 A, JP 2005 149938 A, JP 2007 305345 A, JP 2014 191967 A, WO 2013/105362 A1 and JP H09 199117 A.

### Summary of Invention

### Problem to Be Solved by the Invention

Patent Document 1 suggests that active material-non-applied portions are superposed, the electrode terminal and the metal piece are collectively joined by ultrasonic welding. The ultrasonic welding is performed by pressing a horn and an anvil to a portion to be joined. Typically, the horn applies pressure and ultrasonic vibration in a state where the contact area of the horn and the anvil is smaller than the area of the portion to be joined, and the horn and the anvil substantially come into point contact with the electrode terminal and the metal piece. The active material-non-applied portion, the electrode terminal and the metal piece are firmly joined by the ultrasonic vibration, but the electrode terminal and the metal piece may be lifted and deformed in a periphery of the portion where the horn and the anvil are in contact therewith. Such a deformation in the periphery of the contact portion is not taken into consideration at all in Patent Document 1. When the electrode terminal and the metal piece are thus lifted in the ultrasonic welding process, even if the protective tape or the protective member are attached as disclosed in Patent Documents 2, 3, edges of the lifted electrode terminal and metal piece may cause breakage or piercing of the protective tape or the protective member, thereby piercing the flexible film that makes up the outer container. Particularly, when the edges of the electrode terminal and metal piece reach a metal layer that is an inner layer of the flexible film, the metal layer and the electrode are short-circuited to each other to form an alloy that may cause performance deterioration of the battery and leakage from the outer container.

The metal plate in Patent Document 4 is bent to cover the connection portion between the active material-non-applied portion and the electrode terminal, but is not fixed prior to the ultrasonic welding. Thus, when ultrasonic welding is performed, the edge of the metal plate is lifted and deformed in a periphery of the contact portion with the horn and the anvil thereby pierce the flexible film as described above which may cause a short circuit between the metal layer and the electrode.

Even if the electrode terminal is chamfered as described in the background art of the Patent Document 2, it is not possible to prevent the electrode terminal from being lifted as described above when being joined to the active material-non-applied portion by ultrasonic welding, and therefore the problem in which the edges of the lifted electrode terminal and metal piece pierce the flexible film is not solved at all.

The problem of the occurrence of burrs or the like before the electrode terminal is joined with the active material-non-applied portion, can be somewhat solved by the technologies disclosed in Patent Documents 2 to 4. However, the problem caused by edge lifting that is caused when the electrode terminal and the active material-non-applied portion are joined together by the ultrasonic welding is not considered at all in Patent Documents 1 to 4.

An object of the present invention is to provide a method for manufacturing an electrochemical device that is capable of preventing an outer container from being damaged from the inside by solving the problem caused by edge lifting that is caused when an electrode terminal and an active material-non-applied portion are joined.

### Means to Solve the Problem

The present inventin is a method for manufacturing an electrochemical device according to claim 1. Preferred embodiments are as defined in dependent claims 2 to 4.

### Advantageous Effect of Invention

According to the present invention, the problem caused by edge lifting that is caused when the electrode terminal and the active material-non-applied portion are joined can be solved, thereby preventing the outer container from being damaged from the inside.

### Brief Description of Drawings

[Figure 1a] Figure 1a is a plan view illustrating a basic structure of a laminated-type secondary battery manufactured by the present invention.
[Figure 1b] Figure 1b is a cross-sectional view taken along line A-A of Figure 1a.
[Figure 2] Figure 2 is an enlarged plan view illustrating a main portion of a positive electrode of the secondary battery illustrated in Figure 1.
[Figure 3] Figure 3 is an enlarged plan view illustrating a main portion of a negative electrode of the secondary battery illustrated in Figure 1.
[Figure 4] Figure 4 is a lateral view illustrating a connection step of active material-non-applied portions and an electrode terminal in a method for manufacturing an electrochemical device of the present invention.
[Figure 5] Figure 5 is a lateral view illustrating a step following the step of Figure 4 in the method for manufacturing an electrochemical device of the present invention.
[Figure 6] Figure 6 is a lateral view illustrating a step following the step of Figure 5 in the method for manufacturing an electrochemical device of the present invention.
[Figure 7] Figure 7 is a lateral view illustrating a step following the step of Figure 6 in the method for manufacturing an electrochemical device of the present invention.

### Exemplary Embodiment of the Invention

An exemplary embodiment will be described using the drawings.

### [Configuration of Secondary Battery]

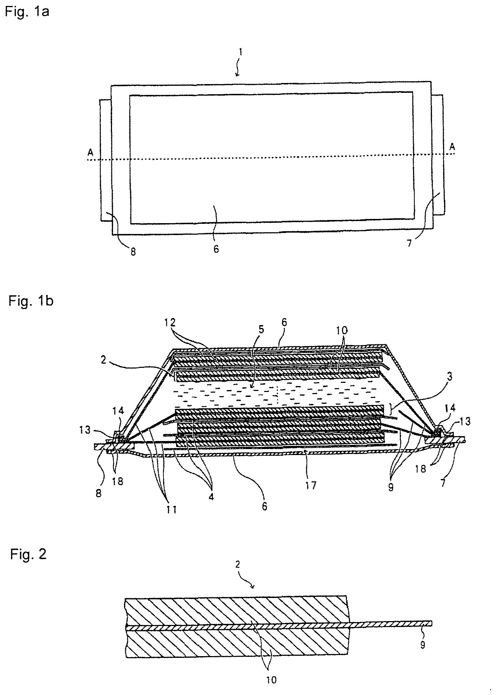

Figures 1a, 1b are schematic diagrams each illustrating an exemplary configuration of a laminated-type lithium ion secondary battery that is an example of electrochemical devices manufactured by a manufacturing method of the present invention. Figure 1a is a plan view viewed vertically from above with respect to a main surface (flat face) of the secondary battery. Figure 1b is a cross-sectional view taken along line A-A of Figure 1a. Figure 2 is an enlarged cross-sectional view of a main portion of a positive electrode.

Lithium ion secondary battery 1 of the present disclosure includes electric storage element (electrode assembly) 17 in which positive electrodes (positive electrode sheets) 2 and negative electrode (negative electrode sheet) 3 are laminated on each other with separator 4 interposed therebetween. Electrode assembly 17 is housed together with electrolyte solution 5 in an outer container made of flexible film 6. One end of positive electrode terminal 7 and one end of negative electrode terminal 8 are connected to positive electrodes 2 and negative electrodes 3 of electrode assembly 17, respectively. The other ends of positive electrode terminal 7 and negative electrode terminal 8 are led out to the outside of flexible film 6. A part of layers (layers in an intermediate portion in a thickness direction) of electrode assembly 17 is not illustrated in Figure 1b, and electrolyte solution 5 is illustrated in the middle portion of electrode assembly 17. In Figure 1b, the way that positive electrode 2, negative electrode 3 and separator 4 are illustrated in that they are not in contact with each other in an easy to see manner, but these are actually closely laminated.

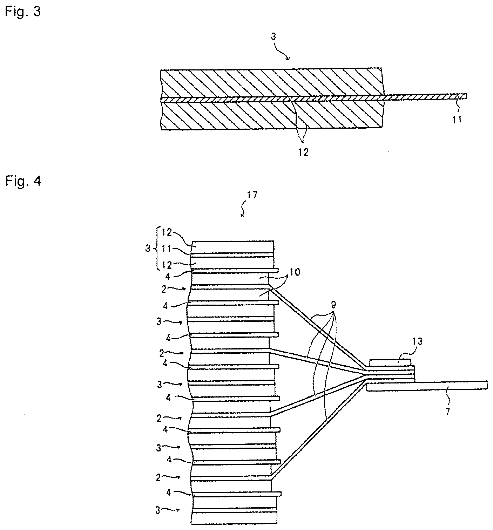

As illustrated in Figure 2, positive electrode 2 includes a current collector for a positive electrode (positive electrode current collector) 9 and active material layer for a positive electrode (positive electrode active material layer) 10 that is formed on positive electrode current collector 9. A front surface and a rear surface of positive electrode current collector 9 each include an active material-applied portion where positive electrode active material layer 10 is formed, and an active material-non-applied portion where positive electrode active material layer 10 is not formed, the active material-applied portion and the active material-non-applied portion being positioned in a line in a longitudinal direction. As illustrated in Figure 3, negative electrode 3 includes a current collector for a negative electrode (negative electrode current collector) 11, and an active material layer for a negative electrode (negative electrode active material layer) 12 that is formed on negative electrode current collector 11. A front surface and a rear surface of negative electrode current collector 11 each include an active material-applied portion and an active material-non-applied portion, the active material-applied portion and the active material-non-applied portion being positioned in a line in a longitudinal direction.

Each of the active material-non-applied portions (current collectors) of positive electrode 2 and negative electrode 3 is used as a tab for connecting the electrode terminal (positive electrode terminal 7 or negative electrode terminal 8). The positive electrode tabs (active material-non-applied portions) of positive electrodes 2 are collectively laminated on positive electrode terminal 7, and the positive electrode tabs that are sandwiched between metal piece (support tab) 13 and positive electrode terminal 7 are connected to one another by ultrasonic welding, or the like. The negative electrode tabs (active material-non-applied portions) of negative electrodes 3 are collectively laminated on negative electrode terminal 8, and the negative electrode tabs that are sandwiched between metal piece (support tab) 13 and negative electrode terminal 8 are connected to one another by ultrasonic welding or the like. These connection portions each are covered by insulating tape 14. The other end of positive electrode terminal 7 and the other end of negative electrode terminal 8 are led out to the outside of the outer container made of flexible film 6.

An external dimension of the active material-applied portion of negative electrode 3 (negative electrode active material layer 12) is larger than that of the active material-applied portion of positive electrode 2 (positive electrode active material layer 10), and is smaller than or equal to that of separator 4.

In the secondary battery of the exemplary embodiment, examples of active material contained in positive electrode active material layer 10 include layered oxide-based materials such as LiCoO₂, LiNiO₂, LiMn₂O₂, Li₂MO₃-LiMO₂, and LiNi_{1/3}Co_{1/3}Mn_{1/3}O₂, spinel-based materials such as LiMn₂O₄, olivine-based materials such as LiMPO₄, fluorinated olivine-based materials such as Li₂MPO₄F, and Li₂MSiO₄F, and vanadium oxide-based materials such as V₂O₅. A part of the elements making up the active materials contained in each positive electrode active material may be replaced with other elements. The positive electrode active material may contain excess Li. The positive electrode active materials may be used singly or as a combination of two or more active materials.

Examples of active material contained in negative electrode active material layer 12 include carbon materials such as graphite, amorphous carbon, diamond-like carbon, fullerene, carbon nanotubes, and carbon nanohorns, lithium metal materials, alloy-based materials such as silicone and tin, oxide-based materials such as Nb₂O₅, and TiO₂, and their composite materials.

Active material mixtures contained in positive electrode active material layer 10 and negative electrode active material layer 12 each are obtained by appropriately adding a binder, a conductive agent and the like to the active material described above. Examples of the conductive agent include carbon black, carbon fiber, and graphite. These conductive agents may be used singly or as a combination of two or more conductive agents. Examples of the binder that can be used include polyvinylidene fluoride, polytetrafluoroethylene, carboxymethylcellulose and modified acrylonitrile rubber particles.

Examples of a material that can be used for positive electrode current collector 9 include aluminum, stainless steel, nickel, titanium, and alloys thereof. Aluminum, in particular, is preferably used for positive electrode current collector 9. Examples of a material that can be used for negative electrode current collector 11 include copper, stainless steel, nickel, titanium and alloys thereof.

Organic solvent can be used for electrolyte solution 5. Examples of organic solvent include cyclic carbonates such as ethylene carbonate, propylene carbonate, vinylene carbonate, and butylene carbonate, chain carbonates such as ethyl methyl carbonate (EMC), diethyl carbonate (DEC), dimethyl carbonate (DMC), and dipropyl carbonate (DPC), aliphatic carboxylate esters, γ-lactones such as γ-butyrolactone, chain ethers and cyclic ethers. The organic solvents may be used singly or as a combination of two or more thereof. Furthermore, a lithium salt can be dissolved in these organic solvents.

Separator 4 mainly includes resin porous membranes, woven fabrics, nonwoven fabrics and so on. Examples of the resin component that can be used includes polyolefin resins such as polypropylene, and polyethylene, polyester resins, acryl resins, styrene resins, nylon resins, aramid resins (aromatic polyamide resins) and polyimide resins. A fine porous membrane of a polyolefin, in particular, is preferably used for separator 4 because of its excellent ion permeability properties and excellent properties for physically separating the positive and negative electrodes. Furthermore, as required, separator 4 may include a layer containing inorganic substance particles. Examples of the inorganic substance particles include particles of insulative oxides, nitrides, sulfides, and carbides. In Particular, inorganic substance particles that contain TiO₂ or Al₂O₃ are preferable.

As the outer container, a light outer case made of flexible film 6 is used. Flexible film 6 may be a laminate film that includes a metal layer as a base material, and resin layers that are formed on a front surface and a rear surface of the metal layer. As a material of the metal layer, there can be selected a material having the barrier property capable of preventing the leakage of electrolyte solution 5 to the outside and the penetration of moisture from the outside. Examples of the material that can be used include aluminum and stainless steel. At least one surface of the metal layer is provided with a heat fusing resin layer containing a modified polyolefin and the like. The outer container is formed by making the heat fusing resin layers of flexible films 6 face each other and by heat fusing the circumference of the portion where electrode assembly 17 is housed. A surface of the outer container that is a surface opposite to a surface where the heat fusing resin layer is formed can be provided with a resin layer of nylon film, polyethylene terephthalate film, polyester film or the like.

Examples of materials that can be used for positive electrode terminal 7 include materials made of aluminum or aluminum alloys. Examples of materials that can be used for negative electrode terminal 8 include materials made of copper or copper alloys. Alternatively, copper or copper alloys may be plated with nickel. The other ends of terminals 7, 8 each are led out to the outside of the outer container. At an earlier step, each of terminals 7, 8 may be provided with heat fusing resin at a portion which corresponds to a heat welding portion in an outer peripheral portion of the outer container.

Positive electrode active material layer 10 and negative electrode active material layer 12 may have, for example, unavoidable inclination, unevenness, roundness or the like of each layer that are caused by the variations in manufacturing and the layer forming properties.

### [Method for Manufacturing Secondary Battery]

To manufacture a secondary battery, first, electrodes 2, 3 for the secondary battery are manufactured. Specifically, positive electrode active material layers 10 are formed on both surfaces of positive electrode current collector 9, respectively, as illustrated in Figure 2. An end of the active material-applied portion (positive electrode active material layer 10) at a boundary region with the active material-non-applied portion may be substantially perpendicular to positive electrode current collector 9, and may have a thickness different from that of the center portion of positive electrode active material layer 10. As illustrated in Figure 3, negative electrode active material layers 12 are formed on both surfaces of negative electrode current collector 11, respectively. An end of negative electrode active material layer 12 (end of active material-applied portion) may be substantially perpendicular to negative electrode current collector 11, and may have a thickness different from that of a center portion of negative electrode active material layer 12. Positive electrode 2 and negative electrode 3 thus formed are alternately and repeatedly laminated with separator 4 interposed therebetween, and are connected to positive electrode terminal 7 and negative electrode terminal 8, respectively.

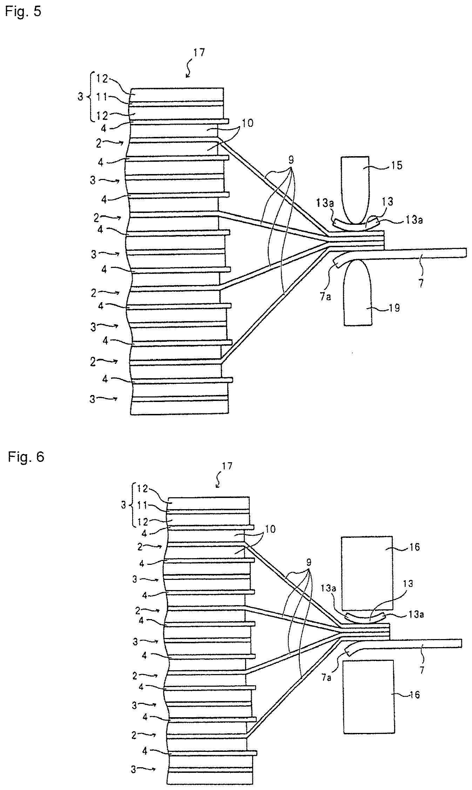

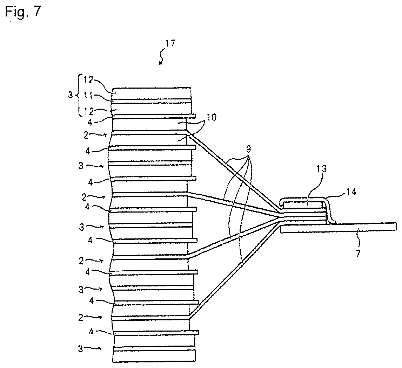

A step of connecting positive electrode terminal 7 and negative electrode terminal 8 will be described in details. As illustrated in Figure 4, stack of the active material-non-applied portions (positive electrode current collectors 9) of positive electrodes 2 are closely superposed on positive electrode terminal 7, and metal piece (support tab) 13 is further disposed to be superposed on the stack of the active material-non-applied portions. As illustrated in Figure 5, positive electrode terminal 7 and metal piece 13, which sandwich positive electrode current collectors 9, are respectively pushed by horn 15 and anvil 19 and pressure and vibration are applied to positive electrode terminal 7 and metal piece 13. Therefore, positive electrode terminal 7, metal piece 13 and stacked active material-non-applied portions are joined together by ultrasonic welding. When metal piece 13, active material-non-applied portions (positive electrode current collectors 9), and positive electrode terminal 7 are thus joined together, lifting and deformation may be generated in the circumferences of portions of metal piece 13 and positive electrode terminal 7 where horn 15 and anvil 19 are in contact with metal piece 13 and positive electrode terminal 7, respectively. Then, as illustrated in Figure 6, lifted portions 7a, 13a are pressed by pressing members 16. The pressing enables metal piece 13 and positive electrode terminal 7 to be redeformed to be flat. As illustrated in Figure 7, protective insulating tape 14 is attached to metal piece 13. In negative electrode 3, stack of the active material-non-applied portions (negative electrode current collectors) 11 is similarly sandwiched between metal piece 13 and negative electrode terminal 8, and are joined together by ultrasonic welding, although not illustrated. Since lifting and deformation are generated particularly in edge portions of metal piece 13 and negative electrode terminal 8 in the ultrasonic welding process, metal piece 13 and negative electrode terminal 8 are pressed by pressing members 16 so that connection portions are redeformed to be flat. Then, protective insulating tape 14 is attached to metal piece 13.

Electrode assembly 17 is completed by connecting positive electrode terminal 7 to the stacked portion of the active material-non-applied portions (positive electrode current collectors 9) of positive electrodes 2, and by connecting negative electrode terminal 8 to the stacked portion of the active material-non-applied portions (negative electrode current collectors 11) of negative electrodes 3. The completed electrode assembly 17 is housed together with electrolyte solution 5 in the outer container made of flexible film 6. Positive electrode terminal 7 and negative electrode terminal 8 that are led out to the outside of the outer container are fixed to the outer peripheral portions of flexible films 6 through sealing materials (sealant) 18 that are previously provided to electrode terminals 7, 8, respectively. And, in the outer peripheral portions of the outer container where electrode terminals 7, 8 do not pass through, the outer peripheral portions of flexible films 6 are heat-welded to seal the outer container in which electrode assembly 17 is housed, thereby completing secondary battery 1 illustrated in Figure 1.

According to the above-described method of the present invention, even if lifting and deformation are generated in portion 7a of electrode terminal 7, 8 and portion 13a of metal piece 13 when metal piece 13, active material-non-applied portions (current collector 9, 11), and electrode terminal 7, 8 are joined together, metal piece 13 and electrode terminal 7, 8 are pressed by pressing members 16 to be flat, and then electrode assembly 17 is housed in the outer container made of flexible film 6. Accordingly, flexible film 6 can be prevented from damage caused by lifted portion 7a of electrode terminal 7, 8 and lifted portion 13a of metal piece 13. Even if burrs and flashes are generated when metal piece 13 and electrode terminals 7, 8 are formed, burrs and flashes of metal piece 13 and electrode terminals 7, 8 can be made flat by pressing metal piece 13 and electrode terminals 7, 8. Note that even if metal piece 13 and electrode terminals 7, 8 cannot be made completely flat, this effect can be sufficiently achieved by eliminating, through pressing, protruded portions that may cause damage to flexible film 6. For example, even if a somewhat lifted portion due to crushing of the edge or a folded portion of the edge is caused when pressing members 16 press lifted portion 13a of metal piece 13 and lifted portion 7a of electrode terminal 7, 8, such a portion does not become problem. Note that a configuration which does not comprise metal piece 13 also has at least the effect of preventing flexible film 6 from damage caused by deformation of electrode terminals 7, 8, and therefore, such a configurationit is effective as the present invention.

According to the present invention, at least the damage to the inside of the outer container can be prevented or reduced, this damage being caused by deformation (lifting of edge) that occurs when electrode terminals 7, 8 are joined with the stack of the active material-non-applied portions (current collectors 9 and 11), thereby preventing a short-circuit between the electrode and the metal layer that is an inner layer of an outer film, and the formation of alloy due to the short-circuit, and reducing risks of the performance deterioration as the battery and the leakage of fluid (electrolyte solution 5) from the inside of the outer container.

In the above-described exemplary embodiment, a laminated body in which positive electrodes 2 and negative electrodes 3 are alternately and repeatedly laminated on each other with separators 4 interposed therebetween is used as electrode assembly 17. However, a laminated body in which only one positive electrode 2 and only one negative electrode 3 are superposed with each other with separator 4 interposed therebetween, can be used as electrode assembly 17. A wound body, in which one long positive electrode 2 and one long negative electrode 3 that are superposed on each other with separator 4 interposed therebetween are wound, can be used as electrode assembly 17. The present invention is particularly useful as a method for manufacturing a lithium ion secondary battery, and is also effective in being applied to a method for manufacturing a secondary battery other than a lithium ion battery, and an electrochemical device other than batteries such as capacitors (condensers).

The present application claims priority based on Japanese Patent Application No. 2015-127722 filed on Jun. 25, 2015.

### Reference Signs List

- 1: lithium ion secondary battery (electrochemical device)
- 2: positive electrode (positive electrode sheet)
- 3: negative electrode (negative electrode sheet)
- 4: separator
- 5: electrolyte solution
- 6: flexible film
- 7: positive electrode terminal (electrode terminal)
- 7a, 13a: lifted portion
- 8: negative electrode terminal (electrode terminal)
- 9: current collector for positive electrode (positive electrode current collector)
- 10: active material layer for positive electrode (positive electrode active material layer)
- 11: current collector for negative electrode (negative electrode current collector)
- 12: active material layer for negative electrode (negative electrode active material layer)
- 13: metal piece (support tab)
- 14: insulating tape
- 15: horn
- 16: pressing member
- 17: storage element (electrode assembly)
- 18: sealing material (sealant)
- 19: anvil

## Claims

1. A method for manufacturing an electrochemical device in which an electrode assembly (17), in which two types of electrodes (2, 3) are superposed on each other with a separator (4) interposed therebetween, is housed in an outer container, the two types of electrodes (2, 3) each including an active material-applied portion where an active material layer (10, 12) is formed on a current collector (9, 11), and an active material-non-applied portion where an active material layer (10, 12) is not formed on the current collector (9, 11), the method comprising:
joining an electrode terminal (7, 8) and stack of the active material-non-applied portions, with respect to each type of electrodes (2, 3);
pressing a connection portion between the electrode terminal (7, 8) and the stack of the active material-non-applied portions after said joining; and
housing the electrode assembly (17) in the outer container made of a flexible film (6) after said pressing, wherein
in said joining, the electrode terminal (7, 8) is disposed on one surface of the stack of the active material-non-applied portions, and a metal piece (13) is disposed on another surface of the stack of the active material-non-applied portions, the electrode terminal (7, 8) and the metal piece (13) being superposed on and joined together with the stack of the active material-non-applied portions, and
in said pressing, the electrode terminal (7, 8) and the metal piece (13) that sandwich the stack of the active material-non-applied portions therebetween are respectively pressed, and at least an edge portion of the metal piece (13) is pressed by a pressing member (16).

2. The method for manufacturing an electrochemical device according to claim 1, further comprising attaching an insulating tape (14) on the metal piece (13) after said pressing.

3. The method for manufacturing an electrochemical device according to claim 1 or 2, wherein ultrasonic welding is performed in said joining.

4. The method for manufacturing an electrochemical device according to any one of claims 1 to 3, wherein the electrochemical device is a secondary battery (1).

## Patentansprüche

1. Verfahren zur Herstellung einer elektrochemischen Vorrichtung, bei dem eine Elektrodenanordnung (17), bei der zwei Arten von Elektroden (2, 3) mit einem dazwischen angeordneten Separator (4) übereinander angeordnet sind, in einem äußeren Behälter untergebracht ist, wobei die zwei Arten von Elektroden (2, 3) jeweils einen mit aktivem Material versehenen Abschnitt, in dem eine Schicht (10, 12) aus aktivem Material auf einem Stromkollektor (9, 11) ausgebildet ist, und einen nicht mit aktivem Material versehenen Abschnitt, in dem eine Schicht (10, 12) aus aktivem Material nicht auf dem Stromkollektor (9, 11) ausgebildet ist, aufweisen, wobei das Verfahren aufweist:
Verbinden eines Elektrodenanschlusses (7, 8) und eines Stapels der nicht mit aktivem Material versehenen Abschnitte, mit Bezug auf jede Art von Elektroden (2, 3),
Pressen eines Verbindungsabschnitts zwischen dem Elektrodenanschluss (7, 8) und dem Stapel der nicht mit aktivem Material versehenen Abschnitte, nach dem Verbinden, und
Aufnahme der Elektrodenanordnung (17) in dem aus einer flexiblen Folie (6) bestehenden Außenbehälter nach dem Pressen, wobei
bei dem Verbinden der Elektrodenanschluss (7, 8) auf einer Oberfläche des Stapels der nicht mit aktivem Material versehenen Abschnitte angeordnet ist, und ein Metallstück (13) auf einer anderen Oberfläche des Stapels der nicht mit aktivem Material versehenen Abschnitte angeordnet ist, wobei der Elektrodenanschluss (7, 8) und das Metallstück (13) auf dem Stapel der nicht mit dem aktiven Material versehenen Abschnitte überlagert und verbunden sind, und
bei dem Pressen der Elektrodenanschluss (7, 8) und das Metallstück (13), die den Stapel des nicht mit aktivem Material versehenen Abschnitts zwischen sich einschließen, jeweils gepresst werden und mindestens ein Randabschnitt des Metallstücks (13) durch ein Presselement (16) gepresst wird.

2. Verfahren zur Herstellung einer elektrochemischen Vorrichtung nach Anspruch 1, wobei nach dem Pressen ein Isolierband (14) auf dem Metallstück (13) angebracht wird.

3. Verfahren zur Herstellung einer elektrochemischen Vorrichtung nach Anspruch 1 oder 2, wobei dem Verbindenden eine Ultraschallschweißung durchgeführt wird.

4. Verfahren zur Herstellung einer elektrochemischen Vorrichtung nach einem der Ansprüche 1 bis 3 , wobei die elektrochemische Vorrichtung eine Sekundärbatterie (1) ist.

## Revendications

1. Procédé de fabrication d'un dispositif électrochimique dans lequel est logé un ensemble d'électrodes (17) dans un récipient extérieur, dans lequel deux types d'électrodes (2, 3) sont superposés l'un sur l'autre, un séparateur (4) étant interposé entre ces derniers, les deux types d'électrodes (2, 3) comportant chacun une partie avec application de matière active où une couche de matière active (10, 12) est formée sur un collecteur de courant (9, 11), et une partie sans application de matière active où aucune couche de matière active (10, 12) n'est formée sur le collecteur de courant (9, 11), le procédé comprenant :
la jonction d'une borne d'électrode (7, 8) et d'une pile des parties sans application de matière active, par rapport à chaque type d'électrodes (2, 3) ;
le pressage d'une partie de connexion entre la borne d'électrode (7, 8) et la pile des parties sans application de matière active après ladite jonction ; et
le logement de l'ensemble d'électrodes (17) dans le récipient extérieur réalisé en un film flexible (6) après ledit pressage, dans lequel
lors de ladite jonction, la borne d'électrode (7, 8) est disposée sur une surface de la pile des parties sans application de matière active, et une pièce métallique (13) est disposée sur une autre surface de la pile des parties sans application de matière active, la borne d'électrode (7, 8) et la pièce métallique (13) étant superposées sur et jointes ensemble avec la pile des parties sans application de matière active, et
lors dudit pressage, la borne d'électrode (7, 8) et la pièce métallique (13), qui prennent en sandwich entre elles la pile des parties sans application de matière active, sont respectivement pressées, et au moins une partie de bord de la pièce métallique (13) est pressée par un élément de pressage (16).

2. Procédé de fabrication d'un dispositif électrochimique selon la revendication 1, comprenant en outre la fixation d'un ruban isolant (14) sur la pièce métallique (13) après ledit pressage.

3. Procédé de fabrication d'un dispositif électrochimique selon la revendication 1 ou 2, dans lequel un soudage par ultrasons est réalisé lors de ladite jonction.

4. Procédé de fabrication d'un dispositif électrochimique selon l'une quelconque des revendications 1 à 3, dans lequel le dispositif électrochimique est une batterie secondaire (1).
